# EUROPEAN PATENT APPLICATION

(11) **EP 4 467 615 A1**
(43) Date of publication of application: **27.11.2024**
(21) Application number: 23752817.9
(22) Date of filing: 06.02.2023
(51) Int. Cl.: C08L 101/00, C01B 33/18, C01F 7/025, C08K 3/22, C08K 3/36

(54) **INORGANIC POWDER**

(30) Priority: 09.02.2022 JP 2022018511
(71) Applicant: Denka Company Limited, Tokyo 103-8338 (JP)
(72) Inventor: AIKYO Teruhiro, Tokyo 103-8338 (JP); KAWABATA Tomohiro, Tokyo 103-8338 (JP); YAMAGUCHI Jun, Tokyo 103-8338 (JP); YAMASHITA Atsushi, Tokyo 103-8338 (JP)
(74) Representative: Gulde & Partner
(86) International application number: PCT/JP2023/003742
(87) International publication number: WO 2023/153353

(57) **Abstract**

Inorganic powder according to the present invention includes spherical alumina powder and spherical silica powder, in which when the inorganic powder is measured using a wet flow type image analyzer, a sphericity of a particle size of more than or equal to 5 um and less than 10 um is represented by S₁, a sphericity of a particle size of more than or equal to 10 um and less than 20 um is represented by S₂, a sphericity of a particle size of more than or equal to 20 um and less than 30 um is represented by S₃, a sphericity of a particle size of more than or equal to 30 um and less than 45 um is represented by S₄, and a sphericity of a particle size of more than or equal to 45 um is represented by S₅, at least two of S₁, S₃, S₄, And S₅ are configured to be more than or equal to 0.89, and S₂ is configured to be more than or equal to 0.75 and less than 0.89.

## Description

### TECHNICAL FIELD

The present invention relates to inorganic powder.

### BACKGROUND ART

So far, various developments have been made in inorganic powder. As this kind of technique, for example, a technique described in Patent Document 1 is known. Patent Document 1 describes, as the inorganic powder, spherical alumina powder including a silica coating layer, that is that is spheroidized by a flame spraying method.

### RELATED DOCUMENT

### PATENT DOCUMENT

[Patent Document 1] Japanese Unexamined Patent Publication No. 2013-014513

### SUMMARY OF THE INVENTION

### TECHNICAL PROBLEM

However, as a result of investigation by the present inventors, it was found that, when the inorganic powder described in Patent Document 1 is mixed with a resin, there is room for improvement in terms of the occurrence of burrs during molding and the mechanical strength of a molded product.

### SOLUTION TO PROBLEM

As a result of further investigation, the present inventors found that, by appropriately controlling a sphericity of inorganic powder including spherical alumina powder and spherical silica powder, the occurrence of burrs during molding in a resin composition where the inorganic powder is mixed with a resin can be suppressed, and the mechanical strength of the obtained molded product can be improved, thereby completing the present invention.

According to one aspect of the present invention, the following inorganic powder is provided.
1. Inorganic powder including spherical alumina powder and spherical silica powder,
   in which when the inorganic powder is measured using a wet flow type image analyzer, a sphericity of a particle size of more than or equal to 5 um and less than 10 um is represented by S₁, a sphericity of a particle size of more than or equal to 10 um and less than 20 um is represented by S₂, a sphericity of a particle size of more than or equal to 20 um and less than 30 um is represented by S₃, a sphericity of a particle size of more than or equal to 30 um and less than 45 um is represented by S₄, and a sphericity of a particle size of more than or equal to 45 um is represented by S₅,
   at least two of S₁, S₃, S₄, and S₅ are more than or equal to 0.89, and
   S₂ is more than or equal to 0.75 and less than 0.89.
2. The inorganic powder according to 1.,
   in which when an average sphericity obtained from an average value of four values of S₁, S₃, S₄, and S₅ (where a value of 0 is excluded) is represented by S_{AVE}, S_{AVE} is more than or equal to 0.89.
3. The inorganic powder according to 1. or 2.,
   in which when an average sphericity obtained from an average value of four values of S₁, S₃, S₄, and S₅ (where a value of 0 is excluded) is represented by S_{AVE} and
   a median size measured using a wet flow type image analyzer is represented by S₅₀ (pm),
   S_{AVE} and S₅₀ are configured to satisfy 0.20 ≤ (S_{AVE})²/S₅₀ ≤ 0.50.
4. The inorganic powder according to any one of 1. to 3.,
   in which a tight bulk density measured in the following procedure B under conditions of a room temperature of 25°C and a humidity of 55% is more than or equal to 1.5 g/cm³ and less than or equal to 2.3 g/cm³,
   (Procedure B)
   the inorganic powder is allowed to free-fall from a height of 25 cm to be injected into a 100 cm³ cup for measurement in an injection amount of 5 to 10 g for 1 minute, and the injection is continued until the spherical silica powder overflows from the cup to prepare a heaped cup;
   Next, after rubbing off the powder overflowing from an upper surface of the heaped cup without tapping, a mass (g) of the inorganic powder filled in the cup is measured to calculate the loose bulk density (g/cm³); and
   on the other hand, after tapping the heaped cup in a vertical direction under a condition of 180 times (stroke length: 2 cm, 1 sec/time) and rubbing off the powder overflowing from the upper surface of the heaped cup, a mass (g) of the inorganic powder filled in the cup is measured to calculate the tight bulk density (g/cm³).
5. The inorganic powder according to any one of 1. to 4.,
   in which when the loose bulk density and the tight bulk density measured in the procedure B are represented by A and P, respectively,
   a compression degree obtained based on ((P - A) /P) × 100 is more than or equal to 30% and less than or equal to 44%.
6. The inorganic powder according to any one of 1. to 5.,
   in which in a volume frequency particle size distribution measured using a wet laser diffraction scattering method, when a particle size corresponding to a cumulative value of 10% is represented by D₁₀, a particle size corresponding to a cumulative value of 50% is represented by D₅₀, and a particle size corresponding to a cumulative value of 97% is represented by D₉₇,
   (D₉₇ - D₁₀)/D₅₀ is more than or equal to 4 and less than or equal to 30.
7. The inorganic powder according to any one of 1. to 6.,
   in which in a volume frequency particle size distribution measured using a wet laser diffraction scattering method, when a particle size corresponding to a cumulative value of 10% is represented by D₁₀ and a particle size corresponding to a cumulative value of 50% is represented by D₅₀,
   D₅₀ - D₁₀ is more than or equal to 0.5 um and less than or equal to 17 um.

### ADVANTAGEOUS EFFECTS OF INVENTION

According to the present invention, it is possible to provide inorganic powder where, when mixed with a resin, the occurrence of burrs during molding can be suppressed and the mechanical strength of the molded product can be improved.

### BRIEF DESCRIPTION OF THE DRAWINGS

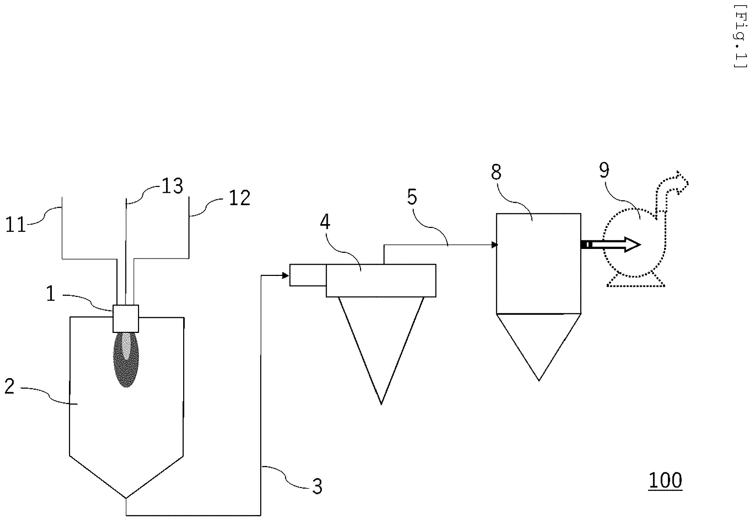

Fig. 1 is a schematic cross-sectional view showing a configuration of a thermal spraying device.

### DESCRIPTION OF EMBODIMENTS

The summary of inorganic powder according to an embodiment of the present invention will be described.

The inorganic powder according to the present embodiment includes spherical alumina powder and spherical silica powder, in which when the inorganic powder is measured using a wet flow type image analyzer, a sphericity of a particle size of more than or equal to 5 um and less than 10 um is represented by S₁, a sphericity of a particle size of more than or equal to 10 um and less than 20 um is represented by S₂, a sphericity of a particle size of more than or equal to 20 um and less than 30 um is represented by S₃, a sphericity of a particle size of more than or equal to 30 um and less than 45 um is represented by S₄, and a sphericity of a particle size of more than or equal to 45 um is represented by S₅, at least two of S₁, S₃, S₄, and S₅ are configured to be more than or equal to 0.89, and S₂ is configured to be more than or equal to 0.75 and less than 0.89.

At least two of S₁, S₃, S₄, and S₅ are more than or equal to 0.89, preferably more than or equal to 0.91, and more preferably more than or equal to 0.92. As a result, fluidity, bending strength, and burr characteristics of the resin composition can be improved.

In addition, at least two, preferably three or more, and more preferably four or more of S₁, S₃, S₄, and S₅ are configured to satisfy more than or equal to 0.89. As a result, fluidity, bending strength, and burr characteristics of the resin composition can be improved.

The lower limit of S₂ is more than or equal to 0.75, preferably more than or equal to 0.81, and more preferably more than or equal to 0.83. As a result, bending strength can be improved.

The upper limit of S₂ is, for example, less than or equal to 0.89, preferably less than or equal to 0.87, and more preferably less than or equal to 0.86. As a result, bending strength can be improved.

An average sphericity obtained from an average value of four values of S₁, S₃, S₄, and S₅ (where a value of 0 is excluded) is represented by S_{AVE}, and a median size of the spherical silica powder measured using a wet flow type image analyzer is represented by S₅₀ (µm).

The lower limit of S_{AVE} is, for example, more than or equal to 0.89, preferably more than or equal to 0.90, and more preferably more than or equal to 0.91. As a result, the fluidity of the resin composition can be improved. The upper limit of S_{AVE} may be, for example, less than or equal to 0.99.

S_{AVE} and S₅₀ may be configured to satisfy 0.20 ≤ (S_{AVE})²/S₅₀ ≤ 0.50.

The lower limit of (S_{AVE})²/S₅₀ is, for example, more than or equal to 0.20, preferably more than or equal to 0.21, and more preferably more than or equal to 0.22. As a result, the fluidity of the resin composition can be improved.

The upper limit of (S_{AVE})²/S₅₀ is, for example, less than or equal to 0.50, preferably less than or equal to 0.45, and more preferably less than or equal to 0.40. As a result, bending strength can be improved.

In the inorganic powder, a compression degree is calculated based on ((P - A) /P) × 100 using a loose bulk density (A) and a tight bulk density (P) obtained in the following procedure B.

The upper limit of the compression degree in the inorganic powder is, for example, less than or equal to 44%, preferably less than or equal to 43%, and more preferably less than or equal to 42%. As a result, improvement of compatibility of the inorganic powder with a resin can be expected.

The lower limit of the compression degree in the inorganic powder is, for example, more than or equal to 30%, preferably more than or equal to 31%, and more preferably more than or equal to 32%. As a result, improvement of handleability of the powder can be expected.

The upper limit of the tight bulk density (P) in the inorganic powder is, for example, less than or equal to 2.3 g/cm³, preferably less than or equal to 2.2 g/cm³, and more preferably less than or equal to 2.1 g/cm³. As a result, compactness increases, and the strength of a resin composition may be improved.

The lower limit of the tight bulk density (P) in the inorganic powder is, for example, more than or equal to 1.5 g/cm³, preferably more than or equal to 1.6 g/cm³, and more preferably more than or equal to 1.7 g/cm³. As a result, the handleability of the powder can be improved.

### (Measurement Procedure B of Tight Bulk Density and Loose Bulk Density)

The inorganic powder is allowed to free-fall from a height of 25 cm to be injected into a 100 cm³ cup for measurement in an injection amount of 5 to 10 g for 1 minute, and the injection is continued until the spherical silica powder overflows from the cup to prepare a heaped cup.

Next, after rubbing off the powder overflowing from an upper surface of the heaped cup without tapping, a mass (g) of the inorganic powder filled in the cup is measured to calculate the loose bulk density (g/cm³).

On the other hand, after tapping the heaped cup in a vertical direction under a condition of 180 times (stroke length: 2 cm, 1 sec/time) and rubbing off the powder overflowing from the upper surface of the heaped cup, a mass (g) of the inorganic powder filled in the cup is measured to calculate the tight bulk density (g/cm³).

A volume frequency particle size distribution of the inorganic powder is measured using a wet laser diffraction scattering method, and in the volume frequency particle size distribution, a particle size corresponding to a cumulative value of 10% is represented by D₁₀, a particle size corresponding to a cumulative value of 50% is represented by D₅₀, and a particle size corresponding to a cumulative value of 97% is represented by D₉₇.

The lower limit of (D₉₇ - D₁₀)/D₅₀ is, for example, more than or equal to 4, preferably more than or equal to 5, and more preferably more than or equal to 6. When the particle size distribution is excessively narrow or when D₅₀ is excessively large, the fluidity or fillability of the powder itself may deteriorate.

The upper limit of (D₉₇ - D₁₀)/D₅₀ is, for example, less than or equal to 30, preferably less than or equal to 25, and more preferably less than or equal to 20. By adjusting the particle size distribution or D₅₀ to be in the appropriate range without being excessively wide or excessively small, the fluidity or fillability of the powder itself can be improved.

The upper limit of D₅₀ - D₁₀ is, for example, less than or equal to 17 um, preferably less than or equal to 16 um, and more preferably less than or equal to 15 um. As a result, appropriate fluidity, thermal conductivity, or the like can be secured.

The lower limit of D₅₀ - D₁₀ is, for example, more than or equal to 0.5 um, preferably more than or equal to 1 um, and more preferably more than or equal to 2 um. As a result, fillability can be secured.

The particle size distribution of the inorganic powder includes values based on particle size measurement using a laser diffraction scattering method, and can be measured using a particle size distribution analyzer, for example, "MODEL LS-13230" (manufactured by Beckman Coulter, Inc.). During the measurement, water is used as a solvent, and as a pre-treatment, a dispersion treatment is performed by applying an output of 200 W for 1 minute using a homogenizer. In addition, a polarization intensity differential scattering (PIDS) concentration is adjusted to be 45 to 55%. 1.33 is used as a refractive index of water, and a refractive index of a material of the powder is considered as a refractive index of the powder. For example, amorphous silica is measured assuming that the refractive index is 1.50, and alumina is measured assuming that the refractive index is 1.68.

In the present embodiment, for example, by appropriately selecting the kind and mixing amount of each of the components in the inorganic powder, the method of preparing the inorganic powder, and the like, the sphericity, the median size, the bulk density, and the compression degree described above can be controlled. Among these, for example, an appropriate process of storing the alumina powder and/or the silica powder immediately after collection, an appropriately adjustment of an aperture during a classification process of these powders, and a combination of spherical alumina powder and spherical silica powder having different particle sizes are elements for adjusting the sphericity, the median size, the bulk density, and the compression degree to be in the desired numerical ranges. For example, in order to control the sphericity in each of the particle size classes, (i) when the raw material supply amount is reduced, the sphericity increases, and when the raw material supply amount is increased, the sphericity decreases. (ii) When a particle size of a plurality of raw materials approaches the average particle size, the sphericity increases, and when the particle size deviates from the average particle size, the sphericity decreases. (iii) When the flame temperature is high, the sphericity increases, and when the flame temperature is low, the sphericity decreases. (iv) When the temperature of the combustible gas is high, the sphericity increases, and when the temperature of the combustible gas is low, the sphericity decreases. (v) When the supporting gas approaches a theoretical ratio, the sphericity increases, and when the supporting gas deviates from the theoretical ratio, the sphericity decreases. (vi) By appropriately introducing the dispersing gas, coalescence is reduced, and the sphericity increases.

The inorganic powder according to the present embodiment will be described in detail.

Each of the spherical alumina powder and the spherical silica powder in the inorganic powder will also be referred to as molten spherical particles, and raw material powder is supplied into a high-temperature flame formed by a combustion reaction of combustible gas and supporting gas, and is melted and spheroidized at a temperature higher than or equal to a melting point thereof to manufacture the molten spherical particle. As necessary, the molten spherical particle obtained as described above may be classified and screened.

For example, the spherical alumina powder and the spherical silica powder are manufactured, respectively, and are mixed to obtain the inorganic powder.

Fig. 1 shows an example of a schematic diagram of a thermal spraying device used for manufacturing the molten spherical particle.

A thermal spraying device 100 of Fig. 1 is configured by: a melting furnace 2 provided in a burner 1; a cyclone 4 for classifying molten spherical particles produced from high-temperature exhaust gas of the flame by suction of a blower 9; and a bag filter 8 for recovering fine powder that cannot be collected by the cyclone 4.

The melting furnace 2 is configured with a vertical furnace body but is not limited thereto. The melting furnace 2 may be a so-called horizontal furnace or an inclined furnace that is a horizontal type and blasts a flame in a horizontal direction.

The high-temperature exhaust gas is cooled by pipes 3 and 5 including a water-cooling jacket.

A suction gas amount control valve and a gas exhaust port (not shown) may be connected to the blower 9.

A collected powder extraction device (not shown) may be connected to lower portions of the melting furnace 2, the cyclone 4, and the bag filter 8.

The classification can be performed using a well-known device such as a gravity-settling chamber, a cyclone, or a classifier having a rotary blade. This classification operation may be incorporated into a transport step of a melted and spheroidized product, or may be performed in another line after collecting the powder in a batchwise manner.

As the combustible gas, for example, one kind or two or more kinds such as acetylene, propane, or butane may be used. Propane, butane, or a mixed gas thereof having a relatively small amount of heat generation is preferable.

As the supporting gas, for example, gas including oxygen is used. In general, the use of pure oxygen having a concentration of more than or equal to 99 mass% is inexpensive and most preferable. In order to reduce the amount of heat generation from the gas, inert gas such as air or argon can also be mixed with the supporting gas.

As alumina raw material powder that is raw material powder, for example, alumina powder having an average particle size of 3 to 70 um may be used. The supply of aluminum hydroxide powder into a high-temperature flame may be performed through a dry process or a wet process in the form of a slurry using water or the like.

As the silica raw material powder that is raw material powder, for example, a silica raw material such as crystal or natural silica may be used after adjusting the particle size configuration such that the proportion of particles having a particle size of less than or equal to 1 um is 15 to 50% and the proportion of particles having a particle size of more than or equal to 5 um is 50 to 80%.

The content of the spherical silica powder in the inorganic powder is, for example, 3 to 30 mass%, preferably 3 to 20 mass%, and more preferably 3 to 10 mass% with respect to 100 mass% of the total value of the spherical alumina powder and the spherical silica powder.

The spherical silica powder may be amorphous and/or crystalline.

In the spherical silica powder, for example, a ratio of amorphousness measured using the following method is preferably more than or equal to 95% and more preferably more than or equal to 97%. The ratio of amorphousness is measured from an intensity ratio between specific diffraction peaks obtained by performing X-ray diffraction analysis in a 20 range of 26° to 27.5° of a CuKα ray using a powder X-ray diffractometer (for example, trade name "MODEL MiniFlex", manufactured by RIGAKU Corporation). In the silica powder, crystalline silica has a main peak at 26.7°, and amorphous silica has no peak. When amorphous silica and crystalline silica are mixed, a peak height of 26.7° corresponding to the proportion of the crystalline silica is obtained. Therefore, a crystalline silica mixing ratio (X-ray diffraction intensity of sample/X-ray diffraction intensity of crystalline silica) is calculated from a ratio of an X-ray intensity of the sample to an X-ray intensity of a crystalline silica standard sample, and the ratio of amorphousness is obtained from the expression "Ratio of Amorphousness (%) = (1 - Crystalline Silica Mixing Ratio) × 100".

A material where the inorganic powder according to the present invention is mixed in a resin composition can be suitably used as a resin molding material.

Next, the resin composition according to the present embodiment will be described.

The resin composition includes a resin or a well-known resin additive in addition to the inorganic powder according to the present invention.

The inorganic powder in the resin composition may be used alone or may be mixed with another filler for use. The resin composition may include 10 to 99 mass% of the inorganic powder, or may include 10 to 99 mass% of mixed inorganic powder including the inorganic powder and the other filler. In addition, the content of the other filler in the mixed inorganic powder may be, for example, 1 to 20 mass% or 3 to 15 mass% with respect to 100 mass% of the inorganic powder.

In the present specification, "to" represents that an upper limit value and a lower limit value are included unless specified otherwise.

Examples of the other filler include titania, silicon nitride, aluminum nitride, silicon carbide, talc, and calcium carbonate. As the other filler, a filler having an average particle size of about 5 to 100 um is used, and a particle size configuration and a shape thereof are not particularly limited.

Examples of the above-described resin include an epoxy resin, a silicone resin, a phenol resin, a melamine resin, a urea resin, an unsaturated polyester, a fluororesin, a polyamide such as polyimide, polyamideimide, or polyetherimide, a polyester such as polybutylene terephthalate or polyethylene terephthalate, polyphenylene sulfide, wholly aromatic polyester, polysulfone, a liquid crystal polymer, polyethersulfone, polycarbonate, a maleimide-modified resin, an ABS resin, an acrylonitrile-acrylic rubber-styrene (AAS) resin, and an acrylonitrile-ethylene-propylene-diene rubber-styrene (AES) resin. These resins may be used alone or may be used in combination of two or more kinds.

The resin composition can be manufactured, for example, by blending raw material components at a predetermined amount ratio using a blender, a Henschel mixer, or the like, kneading the blended product using a heating roll, a kneader, a single-screw or twin-screw kneader, or the like, and cooling and crushing the kneaded product.

Hereinabove, the embodiment of the present invention has been described. However, the embodiment is merely an example of the present invention, and various configurations other than the above-described configurations can be adopted. In addition, the present invention is not limited to the above-described embodiment, and modifications, improvements, and the like within a range where the object of the present invention can be achieved are included in the present invention.

### Examples

Hereinafter, the present invention will be described in detail with reference to Examples. However, the present invention is not limited to the description of these Examples.

### <Manufacturing of Inorganic Powder>

Various spherical alumina powders and spherical silica powders were manufactured using the thermal spraying device 100 shown in Fig. 1.

The thermal spraying device 100 shown in Fig. 1 includes the melting furnace 2, the burner 1 that is provided in an upper portion of the melting furnace 2, and a collection line that is directly connected to a lower portion of the melting furnace 2 and consists of the cyclone 4 and the bag filter 8.

The burner 1 had a double pipe structure capable of forming an inner flame and an outer flame, was provided on the top portion of the melting furnace 2, and was connected to each of a combustible gas pipe 11, a supporting gas supply pipe 12, and a raw material supply pipe 13.

In the melting furnace 2, the raw material powder was supplied into a high-temperature flame by the raw material supply pipe 13 and was melted such that spheroidized molten spherical particles were able to be formed. The molten spherical particles having passed through the melting furnace 2 were sucked by the blower 9 together with combustion exhaust gas, were moved into the pipes 3 and 5 by the air, and were classified and collected by the cyclone 4 or the bag filter 8.

### (Example 1)

### · Manufacturing of Spherical Alumina Powder

Using the above-described thermal spraying device 100, LPG as the combustible gas was supplied from the combustible gas pipe 11, air in the atmosphere as the supporting gas was supplied from the supporting gas supply pipe 12, and a high-temperature flame was formed by combustion of LPG and oxygen in the burner 1.

Secondary air was supplied to the cyclone 4 by a rotary valve (not shown) provided in the pipe 3. As the secondary air, air in the atmosphere was used. In addition, the degree of opening/closing of a lower valve (lower aperture) in the cyclone 4 was set to 100%.

As the raw material powder, alumina powder where the average particle size (D₅₀) had a maximum value in a range of 2 to 45 um was used. The molten spherical particles collected by the bag filter 8 were recovered as the spherical alumina powder.

### · Manufacturing of Spherical Silica Powder

Spherical silica powder was manufactured using the same method as the spherical alumina powder described above, except that natural silica powder having an average particle size (D₅₀) of 5 um was used as the raw material powder and the supply amount of carrier gas of the raw materials was 10 Nm³/hr, the supply amount of the combustible gas of the burner was 10 Nm³/hr, and the supply amount of the supporting gas was 25 Nm³/hr.

The molten spherical particles collected by the bag filter 8 were recovered as the spherical silica powder having an average particle size (D₅₀) of 0.3 µm.

### · Manufacturing of Inorganic Powder

Within 28 days immediately after the collection, the spherical silica powder was stored in an aluminum bag (LAMIZIP AL, manufactured by Seisannipponsha Ltd.) at a humidity of 60 to 80% and a temperature of 20 to 30°C (storage process). The spherical silica powder that was just taken out by opening the aluminum bag and the spherical alumina powder that was just manufactured as described above were mixed at a mass ratio of 90:10 to obtain inorganic powder.

### (Examples 2 to 4)

Spherical alumina powders were obtained using the same method as that of Example 1, except that the lower apertures during the classification process during the manufacturing of the spherical alumina powder were changed to 20%, 25%, and 35%, respectively, and inorganic powders were obtained using the spherical alumina powders.

### (Comparative Example 1)

The above-described spherical alumina powder was used as the inorganic powder without being mixed with the spherical silica powder.

### (Comparative Example 2)

Inorganic powder was obtained using the same method as that of Example 1, except that, during the manufacturing of the spherical alumina powder, the supply amount of the combustible gas of the burner and the supply amount of the supporting gas were changed to be 1.5 times those of Example 1 and the spherical silica powder that was stored in the atmosphere for 28 hours without performing the storage process was used.

**[Table 1]**

| Inorganic Powder | | Unit | Example 1 | Example 2 | Example 3 | Example 4 | Comparative Example 1 | Comparative Example 2 |
|---|---|---|---|---|---|---|---|---|
| Sphericity | 5 to 10 µm S₁ | | 0.91 | 0.92 | 0.91 | 0.93 | 0.82 | 0.86 |
| | 10 to 20 µm S₂ | | 0.87 | 0.83 | 0.86 | 0.86 | 0.71 | 0.90 |
| | 20 to 30 µm S₃ | | 0.92 | 0.94 | 0.91 | 0.92 | 0.80 | 0.91 |
| | 30 to 45 µm S₄ | | 0.92 | 0.87 | 0.86 | 0.92 | 0.80 | 0.91 |
| | ≥45 µm S₅ | | 0.92 | 0 | 0.89 | 0.90 | 0.83 | 0.94 |
| S_{AVE} | | | 0.91 | 0.89 | 0.89 | 0.91 | 0.79 | 0.90 |
| Median Size S₅₀ | | µm | 3.6 | 3.2 | 3.2 | 3.6 | 3.7 | 4.2 |
| (S_{AVE})²/S₅₀ | | | 0.23 | 0.25 | 0.25 | 0.23 | 0.17 | 0.19 |
| Powder Tester | Loose Bulk Density | g/cm³ | 1.4 | 1.3 | 1.4 | 1.3 | 1.3 | 1.5 |
| | Tight Bulk Density | g/cm³ | 2.1 | 2.1 | 2.1 | 2.0 | 2.4 | 2.2 |
| | Compression Degree | % | 35 | 37 | 35 | 35 | 45 | 32 |
| Particle Size Distribution | D₁₀ | µm | 3.0 | 2.2 | 2.2 | 1.9 | 3.7 | 2.5 |
| | D₅₀ | µm | 16 | 7 | 7 | 5 | 22 | 6 |
| | D₉₇ | µm | 99 | 72 | 63 | 68 | 79 | 22 |
| | D₅₀-D₁₀ | µm | 5 | 5 | 4 | 3 | 18 | 3 |
| | (D₉₇-D₁₀)/D₅₀ | | 6 | 10 | 9 | 14 | 3 | 3 |
| Bending Strength | | | Good | Good | Good | Good | Bad | Bad |
| Burr Characteristics | | | Good | Good | Good | Good | Bad | Good |

### <Sphericity>

Regarding the obtained inorganic powder, the sphericity was obtained as follows under conditions of a room temperature of 25°C and a humidity of 70%.

In the obtained inorganic powder, using a wet flow type image analyzer (manufactured by Sysmex Corporation, FPIA-3000), a sphericity (S₁) of a particle size of more than or equal to 5 µm and less than 10 um, a sphericity (S₂) of a particle size of more than or equal to 10 um and less than 20 um, a sphericity (S₃) of a particle size of more than or equal to 20 um and less than 30 um, a sphericity (S₄) of a particle size of more than or equal to 30 um and less than 45 um, and a sphericity (S₅) of a particle size of more than or equal to 45 µm were measured. In addition, likewise, the median size (S₅₀) was measured.

### [Measurement Procedure]

A measurement sample used in the wet flow type image analyzer was adjusted as follows.

0.05 g of a sample of the inorganic powder was weighed in a 20 ml glass beaker container, 10 ml of a propylene glycol 25 mass% aqueous solution was added thereto, and the solution was dispersed by an ultrasonic disperser (ASU-10M, manufactured by AS ONE Corporation) for 3 minutes . The total amount of the solution was put into FPIA-3000 and was measured in an LPF mode/quantitative count system (total number of counts: 100, number of repetitions of measurement: 1).

Using the above-described wet flow type image analyzer, a perimeter of one particle projection image and a perimeter of a circle corresponding to the area of the particle projection image were analyzed, and a circularity was obtained from the following expression. Circularity = (Perimeter of Particle Projection Image)/(Perimeter of Circle Corresponding to Area of Particle Projection Image)

The sphericity and the circularity are average values of the particles in the range of each of the particle size classes.

The sphericity is a value obtained by squaring the circularity of each of the particle size classes.

In addition, an average sphericity (S_{AVE}) was calculated from an average value of four values of S₁, S₃, S₄, and S₅ (where a value of 0 is excluded).

### <Loose Bulk Density, Tight Bulk Density>

In the obtained inorganic powder, a loose bulk density and a tight bulk density were measured using a powder tester (PT-E type, manufactured by Hosokawa Micron Group) under conditions of a room temperature of 25°C and a humidity of 55%.

The specific procedure is as follows.

The inorganic powder as a measurement sample was allowed to free-fall from a height of 25 cm to be injected into a 100 cm³ cup for measurement in an injection amount of 5 to 10 g for 1 minute, and the injection was continued until the spherical silica powder overflows from the cup to prepare a heaped cup.

Next, after rubbing off the powder overflowing from an upper surface of the heaped cup without tapping, a mass (g) of the inorganic powder filled in the cup was measured to calculate the loose bulk density (g/cm³).

On the other hand, after tapping the heaped cup in a vertical direction under a condition of 180 times (stroke length: 2 cm, 1 sec/time) and rubbing off the powder overflowing from the upper surface of the heaped cup, a mass (g) of the inorganic powder filled in the cup was measured to calculate the tight bulk density (g/cm³).

When the loose bulk density and the tight bulk density obtained in the above-described procedure were represented by A and P, respectively, the compression degree (%) was obtained based on the expression: "((P - A)/P) × 100".

### <Particle Size Distribution>

Regarding the obtained inorganic powder, a volume frequency particle size distribution was obtained with a wet laser diffraction scattering method using a particle size distribution analyzer (LS-13230, manufactured by Beckman Coulter, Inc.). Water was used as a solvent, and as a pre-treatment, a dispersion treatment was performed by applying an output of 200 W for 1 minute using a homogenizer. In addition, a polarization intensity differential scattering (PIDS) concentration was adjusted to be 45 to 55% for the measurement.

Based on the obtained volume frequency particle size distribution, a particle size D_{X} corresponding to a cumulative value of X% was calculated.

### <Bending Strength>

90 parts by mass of the obtained inorganic powder, 5.5 parts by mass of a biphenyl type epoxy resin (YX-4000HK, manufactured by Mitsubishi Chemical Group Corporation), 4.8 parts by mass of a phenol resin (a phenol aralkyl resin, MEHC-7800S, manufactured by Meiwa Plastic industries, Ltd.), 0.15 parts by mass of triphenylphosphine (TPP, manufactured by Hokko Chemical Industry Co., Ltd.), and 0.35 parts by mass of N-phenyl-3- aminopropyltrimethoxysilane (KBM-573, manufactured by Shin-Etsu Chemical Co., Ltd.) were mixed with each other using a Henschel mixer ("EM-20C/I", manufactured by Nippon Coke & Engineering. Co., Ltd.) under conditions of an ordinary temperature and a rotating speed of 2000 rpm, and the obtained mixture was heated and kneaded using an intermeshing co-rotating twin screw extruder (screw diameter D = 25 mm, L/D = 10.2, paddle rotating speed: 50 to 120 rpm, discharge amount: 3.0 kg/Hr, kneaded product temperature: 98 to 100°C) to obtain a resin composition.

The obtained resin composition was molded into a size of 4 mm × 16 mm × 80 mm at a mold temperature of 180°C and was cured at 180°C for 6 hours to measure a bending strength (MPa) using a measurement method according to JIS K 6911.

When the bending strength is more than or equal to 135 MPa, the mechanical strength was evaluated as Good, and when the bending strength was less than 135 MPa, the mechanical strength was evaluated as Bad.

### <Burr characteristics>

In addition, when the obtained resin composition was molded using a mold for burr measurement having slits of 2 um, 5 um, 10 um, or 30 um, at a molding temperature of 175°C and a molding pressure of 7.4 MPa, the length of the resin cast into the slit was measured using a caliper, and values measured at each of the slits were averaged to obtain a burr length (pm).

When the burr length was less than or equal to 1 mm, it was evaluated that the occurrence of burrs during molding can be suppressed (Good), and when the burr length was more than 1 mm, it was evaluated that burrs may occur during molding (Bad).

In the results of the inorganic powders according to Examples 1 to 4, the mechanical strength in the molded product of the resin composition can be improved as compared to Comparative Examples 1 and 2, and the occurrence of burrs during molding can be suppressed as compared to Comparative Example 1.

The present application claims priority based on Japanese Patent Application No. 2022-018511 filed on February 9, 2022, the entire content of which is incorporated herein by reference.

### REFERENCE SIGNS LIST

- 1: burner
- 2: melting furnace
- 3: pipe
- 4: cyclone
- 5: pipe
- 8: bag filter
- 9: blower
- 11: combustible gas pipe
- 12: supporting gas supply pipe
- 13: raw material supply pipe
- 100: thermal spraying device

## Claims

1. Inorganic powder comprising spherical alumina powder and spherical silica powder,
wherein when the inorganic powder is measured using a wet flow type image analyzer, a sphericity of a particle size of more than or equal to 5 um and less than 10 um is represented by S₁, a sphericity of a particle size of more than or equal to 10 um and less than 20 um is represented by S₂, a sphericity of a particle size of more than or equal to 20 um and less than 30 um is represented by S₃, a sphericity of a particle size of more than or equal to 30 um and less than 45 um is represented by S₄, and a sphericity of a particle size of more than or equal to 45 um is represented by S₅,
at least two of S₁, S₃, S₄, and S₅ are more than or equal to 0.89, and
S₂ is more than or equal to 0.75 and less than 0.89.

2. The inorganic powder according to Claim 1,
wherein when an average sphericity obtained from an average value of four values of S₁, S₃, S₄, and S₅ (where a value of 0 is excluded) is represented by S_{AVE}, S_{AVE} is more than or equal to 0.89.

3. The inorganic powder according to Claim 1 or 2,
wherein when an average sphericity obtained from an average value of four values of S₁, S₃, S₄, and S₅ (where a value of 0 is excluded) is represented by S_{AVE} and
a median size measured using a wet flow type image analyzer is represented by S₅₀ (µm),S_{AVE} and S₅₀ are configured to satisfy 0.20 ≤ (S_{AVE})²/S₅₀ ≤ 0.50.

4. The inorganic powder according to any one of Claims 1 to 3,
wherein a tight bulk density measured in the following procedure B under conditions of a room temperature of 25°C and a humidity of 55% is more than or equal to 1.5 g/cm³ and less than or equal to 2.3 g/cm³,
(Procedure B)
the inorganic powder is allowed to free-fall from a height of 25 cm to be injected into a 100 cm³ cup for measurement in an injection amount of 5 to 10 g for 1 minute, and the injection is continued until the spherical silica powder overflows from the cup to prepare a heaped cup;
next, after rubbing off the powder overflowing from an upper surface of the heaped cup without tapping, a mass (g) of the inorganic powder filled in the cup is measured to calculate the loose bulk density (g/cm³); and
on the other hand, after tapping the heaped cup in a vertical direction under a condition of 180 times (stroke length: 2 cm, 1 sec/time) and rubbing off the powder overflowing from the upper surface of the heaped cup, a mass (g) of the inorganic powder filled in the cup is measured to calculate the tight bulk density (g/cm³).

5. The inorganic powder according to Claim 4,
wherein when the loose bulk density and the tight bulk density measured in the procedure B are represented by A and P, respectively,
a compression degree obtained based on ((P - A) /P) × 100 is more than or equal to 30% and less than or equal to 44%.

6. The inorganic powder according to any one of Claims 1 to 5,
wherein in a volume frequency particle size distribution measured using a wet laser diffraction scattering method, when a particle size corresponding to a cumulative value of 10% is represented by D₁₀, a particle size corresponding to a cumulative value of 50% is represented by D₅₀, and a particle size corresponding to a cumulative value of 97% is represented by D₉₇,
(D₉₇ - D₁₀)/D₅₀ is more than or equal to 4 and less than or equal to 30.

7. The inorganic powder according to any one of Claims 1 to 6,
wherein in a volume frequency particle size distribution measured using a wet laser diffraction scattering method, when a particle size corresponding to a cumulative value of 10% is represented by D₁₀ and a particle size corresponding to a cumulative value of 50% is represented by D₅₀,
D₅₀ - D₁₀ is more than or equal to 0.5 um and less than or equal to 17 um.
